# EUROPÄISCHE PATENTSCHRIFT

(11) **EP 0 452 564 B1**
(45) Veröffentlichungstag und Bekanntmachung des Hinweises auf die Patenterteilung: **08.09.1993**
(21) Anmeldenummer: 90125569.5
(22) Anmeldetag: 27.12.1990
(51) Int. Cl.: H01M 6/52

(54) **Verfahren und Vorrichtung zur Rückgewinnung von Bestandteilen von Trockenbatterien**
Method and apparatus for the recovery of components of dry batteries
Procédé et dispositif pour la récupération de composants de batteries sèches

(30) Priorität: 26.03.1990 AT 701/90
(43) Veröffentlichungstag der Anmeldung: 23.10.1991
(73) Patentinhaber: Fémmü, Csepel Müvek, H-1751 Budapest (HU)
(72) Erfinder: Sipos, Domokos, Dipl.-Metal., H-1074 Budapest (HU); Mosonyi, Arpad, Dipl.-Ökonom, H-1118 Budapest (HU)
(74) Vertreter: Viering, Jentschura & Partner

(56) Entgegenhaltungen:
- GB-A- 2 060 986

## Beschreibung

Die Erfindung betrifft ein Verfahren und eine Vorrichtung, die der Rückgewinnung von Bestandteilen von Trockenbatterien, hauptsächlich Zinkkarbon-Trockenzellen zu deren erneuten Verwendung dienen.

Wie bekannt ist, kann ein immer größerer Teil der elektrischen Geräte von chemischen Stromquellen, insbesondere von sogenannten "Trockenzellen" (d.h. von galvanischen Elementen) betrieben werden. Die im internationalen Handel erhältlichen Trockenzellen sind typisierte Produkte, die in standartisierten Größen und Typen hergestellt werden. Die Zinkkarbon-Trockenzellen bestehen aus verhältnißmäßig einfachen und standartisierten Teilen. (Siehe z.B. Polinszky: "Technisches Lexikon", Band III, Akademia-Verlag Budapest, 1974, Seite 507.)

Solche Trockenzellen wandeln die chemische Energie direkt in elektrische Energie um. Nach Abgabe ihres Energiegehaltes können solche Trockenzellen im allgemeinen nicht geladen werden, ihre Anwendbarkeit ist also auf einen einzigen Betriebszyklus beschränkt.

Die gebrauchten, d.h. die "erschöpften" Trockenzellen werden gegenwärtig meistens als wegzuwerfender Abfall behandelt. Dies bringt jedoch neben einem immer größer werdenden Verbrauch unvermeidlich mit sich, daß einerseits eine immer größere Menge an wertvollen Stoffen für die Industrie verlorengeht, andererseits damit auch die Menge der umweltgefährdenden Abfälle bedeutend größer wird.

Aus den oben erwähnten Gründen wurden Versuche unternommen, die Bestandteile von gebrauchten Trockenzellen zumindest zum Teil zurückgewinnen. Einer bekannten Technologie gemäß werden die Trockenelemente mit erheblichem mechanischen Energieaufwand durch Mahlen zerkleinert, dann werden aus dem so gewonnenen Mahlgut durch Flotation der Kohlenstoff bzw. das Zink voneinander getrennt, wozu jedoch spezielle Flotationshilfsstoffe verwendet werden müssen.

Die mit der obigen Technologie gemachten Versuchserfahrungen zeigten jedoch, daß das Verfahren eine unannehmbar geringe Rentabilität aufweist, da es einen zu großen Aufwand erfordert. Deshalb besteht keine reale Chance für eine ausgedehntere Verbreitung des Verfahrens. Ein weiterer Mangel der obigen Ausführungsform besteht darin, daß die so zurückgewonnenen Abfallstoffe sich im allgemeinen gar nicht zur direkten Wiederverwendung eignen.

Ein Ziel der Erfindung ist das Vermeiden der obigen Mängel, d.h. die Entwicklung einer perfektionierten Lösung zur Wiedergewinnung von Bestandteilen von hauptsächlich Zinkkarbon-Trockenzellen, welche bei einem relativ geringen Aufwand eine bedeutend wirksamere und rentablere Technologie als die bekannte Ausführungsform bietet und die weiterhin auf eine ausgedehntere Verbreitung rechnen kann.

Bei der Lösung der gestellten Aufgabe wurde von dem obigen bekannten Verfahren ausgegangen, mit dem von den Bestandteilen von hauptsächlich Zinkkarbon-Trockenzellen zumindest der Kohlenstoff und/oder das Zink zurückgewonnen wird. Dieses Verfahren wurde erfindungsgemäß weiterentwickelt, indem die zu verarbeitenden Trockenzellen nach Größe und Typ sortiert werden, dann die Bodenplatte der Zinkhülse der Trockenzelle durch Schneiden entfert wird, danach die Kohlestange aus der Trockenzelle ohne Bodenplatte im Ganzen in Längsrichtung herausgeschoben wird und dann aus der Zinkhülse ohne Bodenplatte die Elektrolytmasse ebenfalls durch Herausschieben in Längsrichtung entfernt wird, wobei die abgeschnittene Bodenplatte vorteilhaft zusammen mit der Zinkhülse, die Kohlestange und die Elektrolytmasse hingegen gesondert gesammelt werden.

Mit einer Ausgestaltung der Erfindung ist es zweckmäßig, das Schneiden der Bodenplatte, das Herausschieben der Kohlestange und dann der Elektrolymasse bei den nacheinander zugeführten Trockenzellen zyklisch durchzuführen. Damit kann die Produktivität weiter erhöht werden.

In Fällen, bei denen die Zinkkarbon-Trockenzellen mit einem die Zinkhülse von außen bedeckenden zusätzlichen Metallmantel ausgestattet sind, wird vor dem Schneiden der Bodenplatte dieser äußere Metallmantel durch Aufschlitzen in Längsrichtung von der Zinkhülse entfernt. Damit vereinfacht sich die weitere Verarbeitung.

Das erfindungsgemäße Verfahren kann mit einer Vorrichtung realisiert werden, die entlang der Verarbeitungsbahn der Trockenzelle nacheinander angeordnet eine Zellenzuführeinheit, eine Vorschub-Einspann-Einheit, eine Bodenplattenschneideinheit, eine Kohlestangeausschiebeeinheit, eine Elektrolytausschiebeeinheit sowie eine Hülsenabgabeeinheit besitzt, bei der die Verarbeitungsbahn außerdem mit einem Mitnehmermechanismus, welcher die Trockenzelle zu den oben aufgeführten Einheiten transportieren kann, ausgestattet ist, und weiterhin zumindest die Bodenplattenschneideinheit, die Kohlestangenausschiebeeinheit, die Elektrolytausschiebeeinheit und die Hülsenabgabeeinheit mit jeweils einem Sammelbehälter versehen sind.

Die erfindungsgemäße Vorrichtung ist vorzugsweise wie ein Karussel gestaltet, bei dem der Mitnehmermechanismus als mit einem Antrieb ausgestatteter zentraler Drehtisch gestaltet ist, welcher entlang seinem Rand ein radiales Zelleneinspannest besitzt. Weiterhin ist entlang des Randes des Drehisches tatsächlich die Verarbeitungsbahn angelegt, zu der die Vorrichtung eine vom Rand des Drehtisches mit Abstand angeordnete, die Trockenzellen unten und an der Außenseite stützende Leitbahn besitzt, welche feststehend angebracht ist. Die die Verarbeitung ausführenden Einheiten sind sinngemäß entlang der Verarbeitungsbahn am Rand des Drehtisches angebracht.

Die Vorschub-Einspann-Einheit besitzt vorzugsweise einen zu dem Drehtisch radialen Arbeitszylinder, dessen Einspannkopf gleichzeitig auch als äußere Stütze der Trockenzelle dient. Dadurch erreicht man eine sehr einfache individuelle Zellenzufuhr.

Die Bodenplattenschneideinheit kann vorzugsweise als mit einem Drehantrieb ausgestattete Schneidscheibe gestaltet werden, die in horizontaler Ebene, zum Beispiel über einen Arbeitszlyinder, zum Arbeitsgang des Schneidens verschoben, d.h. angetrieben sein kann.

Die Kohlestangenausschiebeeinheit kann vorzugsweise als ein vertikaler Dorn gestaltet sein, der in axialer Richtung z.B. über einen Arbeitszylinder angetrieben sein kann. An der Stelle der Kohlestangenausschiebeeinheit besitzt die Leitbahn eine zum Dorn koaxial angeordnete Kohlestangendurchlaßöffnung, durch die die Kohlestange in den Sammelbehälter fällt.

Die Elektrolytausschiebeeinheit kann als Dorn mit einem in die Zinkhülse einführbaren Durchmesser ausgebildet sein, der z.B. von einem Arbeitszylinder axial verschiebbar angeordnet ist. Auch hier ist die Leitbahn mit einer koaxial zum Dorn angeordneten Öffnung versehen, die dem Durchlaß der Elektrolytmasse dient.

Die Erfindung wird anhand der Zeichnung, in der eine beispielhafte Ausführungsform der erfindungsgemäßen Vorrichtung dargestellt ist, näher erläutert.
- Fig.1 ist ein Vertikalschnitt einer bekannten Zinkkarbon-Trockenzelle;
- Fig.2 ist die Draufsicht einer beispielhaften Ausführungsform der erfindungsgemäßen Vorrichtung;
- Fig.3 zeigt einen Schnitt entlang der Linie III-III in Fig.2;
- Fig.4 ist der entlang der Linie IV-IV in Fig.2 genommene Schnitt;
- Fig.5 ist der entlang der Linie V-V in Fig.2 genommene Schnitt.

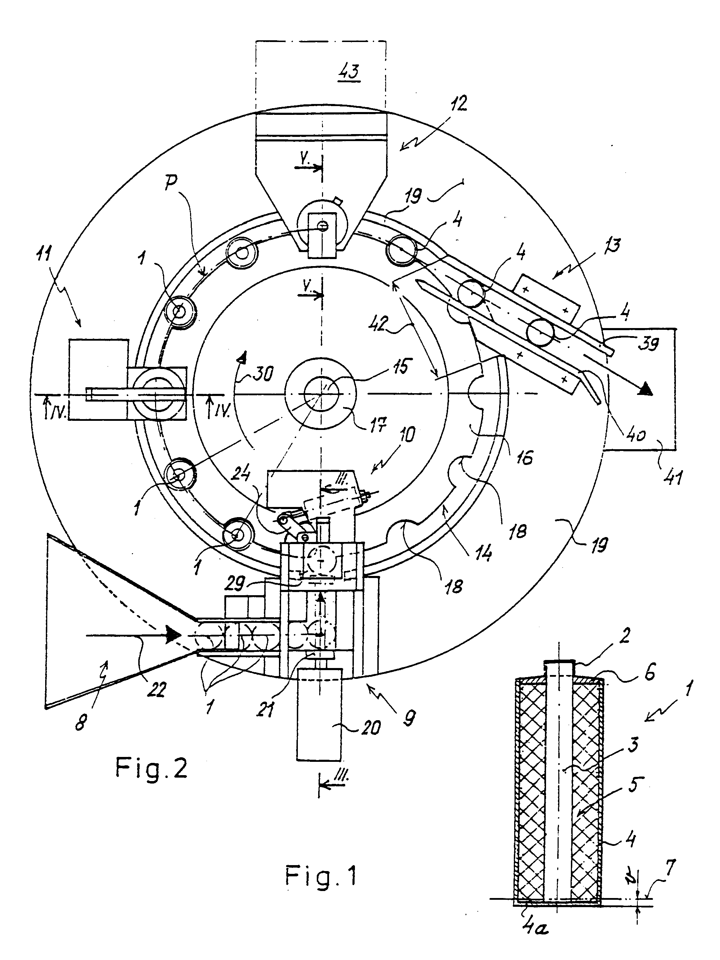

In Figur 1 ist als Beispiel eine im Handel unter der Bezeichnung "R6" bekannte Zinkkarbon-Trockenzelle im Längsschnitt dargestellt. Die Trockenzelle ist im Ganzen mit Bezugsnummer 1 gekennzeichnet. Die Trockenzelle 1 besitzt eine mit einer Kupferkappe 2 ausgestattete zentrale Kohlestange 3, die den negativen Pol der Trockenzelle 1 bildet. Im vorliegenden Fall wird die Außenhülle der Trockenzelle 1 von einer Zinkhülse 4 gebildet, deren Bodenplatte mit 4a bezeichnet ist. Die Zinkhülse 4 bildet den positiven Pol der Trockenzelle 1. In der Zinkhülse 4 befindet sich in dem die Kohlestange 3 umgebenden Ringfeld eine Elektrolytmasse 5, welche in dem vorliegenden Fall aus Ammoniumchlorid (NH₄Cl) und Mangandioxd (MnO₂) besteht.

Im vorliegenden Fall wird die Trockenzelle 1 oben von einem Kunststoffring 6 auf an sich bekannte Weise abgeschlossen.

Bei der Verwendung der Trockenzelle 1 bildet sich ein bestimmter Teil der Zinkhülse 4 entsprechend der folgenden chemischen Rekation um:

Zn + 2MnO₂ + 2NH₄Cl = Mn₂O + (Zn/NH₃/₂)Cl₂ + H₂O

Erfindungsgemäß wird die Bodenplatte 4a der Zinkhülse 4 der Trockenzelle 1 durch Schneiden entfernt. Die Schnittebene ist in Figur 1 mit 7 gekennzeichnet, sie befindet sich von der unteren Ebenen der Bodenplatte 4a im Abstand "v". Dieser Abstand "v" wird zweckmäßig immer so gewählt, daß die Schnittebene 7 direkt über der Bodenplatte 4a liegt.

In den Figuren 2 - 5 wird eine beispielhafte Ausführungsform der erfindungsgemäßen karusselartigen Vorrichtung betrachtet. Aus Figur 2 geht hervor, daß die erfindungsgemäße Vorrichtung eine Zellenzuführeinheit 8, eine Vorschub-Einspann-Einheit g, eine Bodenplattenschneideinheit 10, eine Kohlestangeausschiebeeinheit 11, eine Elektrolytausschiebeeinheit 12 sowie eine Hülsenabgabeeinheit 13 besitzt. Diese Einheiten sind im Sinne der Erfindung entlang der Verarbeitungsbahn P und nacheinander angeordnet und die Vorrichtung ist zum Transport der Trockenzelle mit einem Mitnehmermechanismus 14 ausgestattet.

Im dargestellten Fall ist der Mitnehmermechanismus 14 als um eine zentrale Achse 15 drehbarer Drehtisch 16 gestaltet, der in Antriebsverbindung mit einem rotierenden Schrittgetriebe 17 steht. Entlang des Randes des Drehtisches 16 sind - hier in gleicher Entfernung voneinander - radiale Zelleneinspannester 18 gestaltet. Diese Nester 18 nehmen die Trockenzellen 1 teilweise auf und stützen sie von innen.

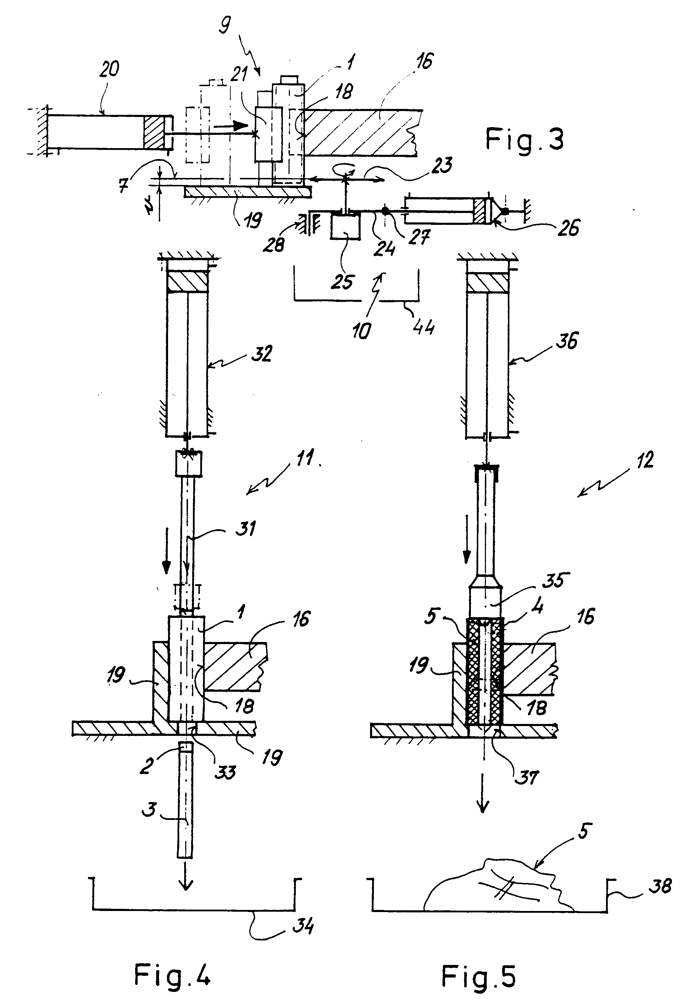

Aus Figur 2 ist ersichtlich, daß im Abstand vom Außenrand des Drehtisches 16 eine kreisringförmige Leitbahn 1g angeordnet 9 ist, die in diesem Fall feststeht. Die Leitbahn 1 erfüllt den Zweck, daß sie die Trockenzelle 1 während der Verarbeitung von unten und an der Außenseite stützt bzw. führt (Figuren 4 und 5).

Die Zellenzuführeinheit 8 ist in diesem Fall als Rinne gestaltet, dorthin gelangen die sortierten, aufzuarbeitenden Trockenzellen 1 von einem nicht extra dargestellten sortierenden Vibrationsschütteltisch z.B. mit Hilfe von Preßluft. (Während der Vorbereitung der Trockenzellen 1 werden diese nach Typ und Größe sortiert und im vorliegenden Fall können nur ausschließlich Trockenzellen vom Typ "R6" aufgearbeitet werden).

Die Anordnung und Details der Vorschub-Einspann-Einheit 9 werden anhand der Figuren 2 und 3 erläutert. Sie besitzt einen zum Drehtisch 16 radial angeordneten Arbeitszylinder 20, bei dem das Ende der Kolbenstange einen Aufnahmekopf 21 hat. Der Aufnahmekopf 21 kann die Trockenzelle 1 aus der Zuführlage in Richtung des in Figur 2 dargestellten Pfeiles 22 senkrecht dazu vorschieben, bis die Trockenzelle 1 in das entsprechende Nest 18 des Drehtisches 16 gelangt. (Die Lage des Aufnahmekopfes 21 und der Trockenzelle 1 ist in Figur 3 mit einer strichpunktierten Linie dargestellt). Der Arbeitszylinder 20 ist hier ein pneumatischer Arbeitszylinder, der an das hier nicht extra dargestellte pneumatische System der Vorrichtung angeschlossen ist.

Im dargestellten Fall arbeitet mit der Vorschub-Einspann-Einheit 9 tatsächlich die Bodenplattenschneideinheit 10 zusammen. Diese hat hier eine horizontale Schneidscheibe 23, die drehbar auf einem Winkelhebel 24 gebettet ist und mit dem Drehantrieb 25 in Verbindung steht. Aus Figur 3 ist ersichtlich, daß die Höhenlage der Schneidscheibe 23 so eingestellt ist, daß sich die Schnittebene 7 von der oberen Ebene der Leitbahn 19 im Abstand "v" befindet. Es ist vorteilhaft, wenn die Höhenlage der Schneidscheibe 23 in vertikaler Richtung verstellbar ist.

Erfindungsgemäß ist die Schneidscheibe 23 in horizontaler Ebene z.B. mit Hilfe eines Arbeitszylinders 26 verschiebbar, d.h. "vorschiebbar". Im dargestellten Fall ist der Arbeitszylinder 26 ebenfalls pneumatisch ausgebildet, bei dem der Kolbenstangenkopf in dem Punkt 27 gelenkig mit dem freien Fnde des Winkelhebels 24 verbunden ist. Das andere Ende des Winkelhebels 24 ist horizontal drehbar in dem Lager 28 gelagert. Mit diesem Arbeitszylinder 26 können also die Schneidscheibe 23 eingedreht und damit die Bodenplatte 4a der Trockenzelle 1 in der Schnittebene 7 abgeschnitten werden.

In Figur 2 ist zu sehen, daß die Bodenplattenschneideinheit 10 gegenüber der Vorschub-Einspann-Einheit 9 angeordnet ist. Es soll noch bemerkt werden, daß zum freien Einschieben der Trockenzelle 1 mit dem Aufnahmekopf 21 im vertikalen Schenkel der Leitbahn 19 eine Öffnung 29 ausgebildet ist. Der vertikale Teil der Leitbahn 19 stützt übrigens die Trockenzelle von außen.

Aus Figur 2 ist ersichtlich, daß im vorliegenden Fall die folgende verarbeitende Station von der Bodenplattenschneideinheit 10 um 90° versetzt entlang des Drehtisches 16 angeordnet ist, namentlich die Kohlestangenausschiebeeinheit 11. In Figur 2 ist die Drehrichtung des Drehtisches 16 mit dem Pfeil 30 gekennzeichnet.

Die Details der Kohlestangenausschiebeeinheit 11 sind in Figur 4 zu sehen. Wie hier dargestellt ist, besitzt die Einheit 11 einen Dorn 31, der vertikal angebracht ist. Der Durchmesser des Dorns 31 stimmt hier mit dem Durchmesser der Kohlestange 3 überein . Mit dem oberen Ende des Dorns 31 ist ein Arbeitszylinder 32 verbunden, bei dem es sich hier ebenfalls um einen pneumatischen Arbeitszylinder handelt. Durch den Arbeitszylinder 32 kann der Dorn 31 aus der in Figur 4 mit der durchgehenden Linie gekennzeichneten oberen Lage in die mit der dünnen Strichpunktlinie gekennzeichnete untere Endlage bewegt werden, wobei sie die Kohlestange 3 zusammen mit der Kupferkappe 2 aus der Trockenzelle 1 ohne Bodenplatte herausschiebt. Dafür ist die Leitbahn 19 mit einer Kohlestangendurchlaßöffnung 33 versehen, deren Durchmesser großer als der der Kupferkappe 2 ist.

In Figur 4 ist weiterhin zu sehen, daß bei der Einheit 11 unter der Leitbahn 19 ein Sammelbehälter 34 angebracht ist, bei dem es sich hier um eine Vibrationsrinne handelt, die dem Sammeln der im Ganzen herausgeschobenen Kohlestangen 3 und gegebenenfalls deren Weitertransport dient.

Gemäß Figur 2 ist die Elektrolytausschiebeeinheit 12 von der Kohlestangenausschiebeeinheit 11 in Richtung des Pfeiles 30 gesehen wiederum um 90° versetzt angeordnet, dies ist detaillierter in Figur 5 dargestellt. Diese Einheit 12 besitzt ebenfalls einen vertikalen Dorn 35, dessen Durchmesser so gewählt ist, daß er in die Zinkhülse 4 der Trockenzelle 1 von oben eingeführt werden kann. Die untere Stirnfläche ist im Interesse einer besseren Führung vorzugsweise konisch gestaltet. Mit dem oberen Ende des Dorns 35 ist der Kolbenstangenkopf eines weiteren Arbeitszylinders 36 verbunden. Mit dem Betätigen dieses Arbeitszylinders kann der Dorn 35 aus der mit der durchgehenden Linie gekennzeichneten oberen Lage in die untere Endlage gebracht werden. Inzwischen schiebt der Dorn 35 die Elektrolytmasse 5 im Ganzen aus der Zinkhülse 4 nach unten heraus. Sie fällt dann durch die Öffnung 37 der Leitbahn 19 in den Sammelbehälter 38. Der Sammelbehälter 38 kann auch eine Vibrationsrinne sein. Der Arbeitszylinder 36 ist hier ebenfalls pneumatisch betätigt und mit dem hier nicht extra dargestellten pneumatischen System der Vorrichtung verbunden.

In Richtung des Pfeiles 30 befindet sich hinter der Elektrolytausschiebeeinheit 12 die Hülsenabgabeeinheit 13 (Figur 2). Diese besteht in diesem Fall aus Leitplatten 39 und 40, die voneinander in einem Abstand angebracht sind, daß sie als Fortsetzung des vertikalen Schenkels der Leitbahn 19 bzw. als innere Führung die bereits leeren Zinkhülsen 4 von der Verarbeitungsbahn entfernen und in den Sammelbehälter 41 bringen. Die Leitplatten 39 und 40 sind in diesem Fall zum horizontalen Teil der Leitbahn 19 verstellbar befestigt.

Aus Figur 2 ist ersichtlich, daß der vertikale Schenkel der Leitbahn 19 zum Einführen der Leitplatten 39 und 40 mit einem Ausschnitt 42 versehen ist.

Die dargestellte beispielhafte Ausführungsform der erfindungsgemäßen Vorrichtung ist mit einer zentralen Steuereinheit 43 ausgestattet, von der aus die Bedienungsperson den im übrigen automatisierbaren Betrieb zentral steuern kann. Mit der Steuereinheit 43 steht auch das nicht extra dargestellte pneumatische System in Verbindung, welches die erwähnten Arbeitszylinder 20, 32, 36 und 26 betätigt. Auf die Steuerung selbst wird hier nicht extra näher eingegangen, da diese auf Grund der obigen Beschreibung der Erfindung für einen sich auf diesem Gebiet auskennenden Fachmann auf der Hand liegt.

Die Funktionsweise der dargestellten beispielhaften Ausführungsform der erfindungsgemäßen Vorrichtung ist die folgende:

Die vorher sortierten Trockenzellen 1 können aus der Zellenzuführeinheit 8 nacheinander über die Vorschub-Einspann-Einheit 9 in das entsprechende Nest 18 des Drehtisches 16 gegeben werden. Dazu wird also zusammen mit der Kolbenstange des Arbeitszylinders 20 der Aufnahmekopf 21 vorgeschoben, welcher die Trockenzelle 1 in das Nest 18 des zu der Zeit stehenden Drehtisches 16 schiebt und dort festhält. Danach erfolgt das Abschneiden der Bodenplatte 4a durch die Bodenplattenschneideinheit 10. Dazu wird der Drehantrieb 25 eingeschaltet, danach wird durch Betätigen des Arbeitszylinders 26 die Schneidscheibe 23 in horizontaler Ebene vorgeschoben, bis die Trockenzelle 1 vollständig durchschnitten ist. Darauffolgend wird die Schneidscheibe 23 durch entgegengesetzte Steuerung des Arbeitszylinders 26 in ihre Ausgangslage zurückgebracht und der Drehantrieb ausgeschaltet. Die abgeschnittene Bodenplatte 4a gelangt mit Hilfe von durch nicht extra abgebildete Düsen zugeführter Preßluft in den unten befindlichen Sammelbehälter 44.

Danach wird durch entgegengesetztes Betätigen des Arbeitszylinders 20 der Aufnahmekopf 21 in die Ausgangsstellung nach hinten gezogen. Darauf erfolgt das Drehen des Drehtisches 16 um 30°, wozu der Antrieb 17 in Gang gesetzt wird. Dabei nimmt also der Drehtisch 16 die in seinem Nest 18 befindliche Zelle zwangsläufig mit, die zu der Zeit unten und außen von der Leitbahn 19 gestützt wird.

Nach der Drehung um 30° bleibt der Drehtisch 16 stehen. Eine genaue Peilung und Lagebestimmung kann man in an sich bekannter Weise z.B. durch Endschalter erreichen (nicht dargestellt).

Dann wird durch Betätigen der Kohlestangenausschiebeeinheit 11 aus der Trockenzelle 1 ohne Bodenplatte die mit einer Kupferkappe 2 versehene Kohlestange 3 im Ganzen herausgeschoben. Dazu wird der Arbeitszylinder 32 im Sinne des Ausschiebens betätigt. Die herausgeschobene Kohlestange 3 fällt unten in den Sammelbehälter 34. Danach wird durch entgegengesetztes Betätigen des Arbeitszylinders 32 der Dorn 31 in die obere Ausgangsstellung zurückgebracht. Es soll bemerkt werden, daß gleichzeitig damit die Einheit 9 eine neue Zelle zuführt, deren Bodenplatte die Einheit 10 in der bereits oben erläuterten Weise entfernt hat.

Danach wird der Drehtisch 16 wiederum um 30° durch Betätigen des Antriebes 17 gedreht. Mit dieser Drehung gelangt die erste Trockenzelle 1 in die Elektrolytausschiebeeinheit 12. Hier wird durch Betätigen des Arbeitszylinders 36, durch Hinabdrücken des Dorns 35 die Elektrolytmasse 5 im Ganzen zusammen mit dem oberen Kunststoffring 6 aus der Zinkhülse 4 herausgeschoben. Diese fallen durch die Öffnung 37 in den Sammelbehälter 38. Danach wird durch Betätigen des Arbeitszylinders 36 in entgegengesetzter Richtung der Dorn 35 in die obere Ausgangsstellung gehoben. Gleichzeitig damit wird in der Einheit 11 aus der als vierte eingeführten Trockenzelle 1 die Kohlestange herausgeschoben, in der Einheit 10 hingegen die Bodenplatte 4a der als siebente und letzte eingeführten Trockenzelle in der oben beschriebenen Weise abgeschnitten.

Darauffolgend wird der Drehtisch 16 erneut um 30° durch den Antrieb 17 weitergedreht, während die Einheit 13 die Zinkhülse 4 aus der Vorrichtung ausführt und die Zinkhülse in den Sammelbehälter 41 fällt.

Die kontinuierliche Betriebsweise der Vorrichtung im Ganzen setzt sich also aus den oben erläuterten zyklischen Arbeitsphasen zusammen. Sie wird durch die Steuereinheit 43 geregelt.

Wie bereits oben erwähnt, können die die Bodenplatten 4a und die Zinkhülsen 4 ohne Bodenplatten sammelnden Sammelbehälter 44 bzw. 41 gegebenenfalls vereinigt werden, da sie dasselbe Material sammeln. Die mit den Kupferkappen 2 versehenen Kohlestangen 3 werden jedoch im Sammelbehälter 34 und die Elektrolytmasse 5 im Sammelbehälter 38 getrennt gesammelt. Gegebenenfalls kann die Elektrolytmasse 5 danach in an sich bekannter Weise weiter in ihre Bestandteile zerlegt werden.

Der wichtigste Vorteil der erfindungsgemäßen Ausführungsform besteht darin, daß gebrauchte oder Ausschuß-Trockenzellen rentabel und produktiv auf mechanischem Weg in ihre Bestandteile zerlegt werden, welche danach in verschiedenen Industriezweigen als Ausgangsmaterial wiederverwertbar sind. Ein besonderer Vorteil der erfindungsgemäßen Technologie besteht darin, daß die Kohlestangen 3 zusammen mit der Kupferkappe 2 im Ganzen unversehrt zurückgewonnen werden können und diese so direkt erneut zur Trockenzellenherstellung verwendet werden können. Ein weiterer Vorteil ist, daß die erfindungsgemäße Ausführungsform für verschieden große Trockenzellen durch relativ einfache Veränderungen weitverbreitet angewendet werden kann. Die so gewonnenen Bestandteile enthalten die kleinstmögliche Verschmutzung, so daß sie im Nachhinein kaum von den Verschmutzungen befreit werden müssen.

Wie aus den obigen Ausführungen hervorgeht, bringt die erfindungsgemäße Ausführungsform den bedeutenden Vorteil mit sich, daß einerseits die Industrie aus bisher zum größten Teil weggeworfenen Abfällen billige Grundstoffe erhält, andererseits durch die erfindungsgemäße Verarbeitung die Menge der umweltschädlichen Abfälle sinkt, weshalb also auch die Bedeutung der Erfindung für den Umweltschutz beträchtlich ist.

Schließlich soll erwähnt werden, daß auch zahlreiche andere Ausführungsformen des erfindungsgemäßen Verfahrens möglich sind. Auch muß die erfindungsgemäße Vorrichtung nicht unbedingt ein Karussell-System sein. Es ist nämlich z.B. auch eine Ausführungsform möglich, bei der die durch die Leitbahn festgelegte Verarbeitungsbahn P geradlinig ist und bei der gleichzeitig an mehreren Trockenzellen derselbe Arbeitsgang vorgenommen wird. (Es soll bemerkt werden, daß in der Zeichnung die kreisförmige Verarbeitungsbahn mit P bezeichnet ist.)

Zurückkommend auf Figur 2 soll bemerkt werden, daß die die einzelnen Arbeitsstationen darstellenden Einheiten 10, 11 und 12 nicht unbedingt um 90° gegeneinander versetzt entlang des Drehtisch 16 angeordnet werden müssen, da auch eine andere Anordnung derselben möglich ist.

## Patentansprüche

1. Verfahren zur Rückgewinnung von Bestandteilen von Zinkkarbon-Trockenzellen, bei dem von den Bestandteilen der Trockenzelle zumindest die Kohle und/oder das Zink zurückgewonnen wird, dadurch gekennzeichnet, daß die Bodenplatte (4a) der Zinkhülse (4) der aufzuarbeitenden, sortierten Trockenzelle (1) durch Schneiden entfernt wird, dann aus der Trockenzelle (1) ohne Bodenplatte die Kohlestange (3) in Längsrichtung herausgeschoben wird, danach aus der Zinkhülse (4) die Elektrolytmasse (5) durch Herausschieben in Längsrichtung entfernt wird, weiterhin die abgeschnittene Bodenplatte (4a) vorzugsweise zusammen mit der Zinkhülse (4), jedoch die Kohlestange (3) und die Elektrolytmasse (5) jede für sich gesammelt werden.

2. Verfahren nach Anspruch 1, dadurch gekennzeichnet, daß das Schneiden der Bodenplatte und das Ausschieben der Kohlestange und der Elektrolytmasse bei nacheinander zugeführten Trockenzellen (1) zyklisch erfolgen.

3. Verfahren nach Anspruch 1 oder 2, dadurch gekennzeichnet, daß vor dem Schneiden der Bodenplatte ein die Zinkhülse (4) der Trockenzelle (1) umgebender Metallmantel nach Aufschlitzen in Längsrichtung entfernt wird.

4. Vorrichtung zur Durchführung des Verfahrens nach einem der Ansprüche 1 - 3, dadurch gekennzeichnet, daß sie entlang einer Verarbeitungsbahn (P) der Trockenzelle (1) nacheinander angeordnet eine Zellenzuführeinheit (8), eine Vorschub-Einspann-Einheit (9), eine Bodenplattenschneideinheit (10), eine Kohlestangenausschiebeeinheit (11), eine Elektrolytausschiebeeinheit (12) sowie gegebenenfalls eine Hülsenabgabeeinheit (13) besitzt und mit einem Mitnehmermechanismus (14) zum Transport der Trockenzelle (1) entlang der Verarbeitungsbahn (P) ausgestattet ist, und weiterhin, daß die Bodenplattenschneideinheit (10), die Kohlestangenausschiebeeinheit (12) und die Hülsenabgabeeinheit (13) mit jeweils einem Sammelbehälter (44, 34, 38, 41) versehen sind.

5. Vorrichtung nach Anspruch 4, dadurch gekennzeichnet, daß sie als Karussell gestaltet ist, bei dem der Mitnehmermechanismus (14) als mit einem Antrieb (17) verbundener zentraler Drehtisch (16) ausgebildet ist, der entlang seinem Rand radiale Zelleneinspannnester (18) besitzt, wobei mit Abstand vom Rand des Drehtisches (16) eine die Trockenzelle (1) unten und an der Außenseite stützende Leitbahn (19) angebracht ist, und daß sich die Vorschub-Einspann-Einheit (g), die Bodenplattenschneideinheit (10), die Kohlestangenausschiebeeinheit (11), die Elektrolytausschiebeeinheit (12) und die Hülsenabgabeeinheit (13) entlang des Randes des Drehtisches (16) befinden.

6. Vorrichtung nach Anspruch 4 oder 5, dadurch gekennzeichnet, daß die Vorschub-Einspann-Einheit (g) einen Arbeitszylinder (20) zur Verschiebung eines Aufnahmekopfes (21) besitzt, wobei der Aufnahmekopf (21) gleichzeitig auch als äußere Stütze der Trockenzelle (1) dient.

7. Vorrichtung nach einem der Ansprüche 4 - 6, dadurch gekennzeichnet, daß die Bodenplattenschneideinheit (10) eine mit einem Drehantrieb (25) ausgestattete Schneidscheibe (23) hat, die in horizontaler Scheibenebene - vorzugsweise durch einen Arbeitszylinder (26) - verschiebbar angebracht ist.

8. Vorrichtung nach einem der Ansprüche 4 - 7, dadurch gekennzeichnet, daß die Kohlestangenausschiebeeinheit (11) einen Dorn (31) aufweist, dessen Durchmesser höchstens mit dem Durchmesser der Kohlestange (3) der Trockenzelle (1) übereinstimmt und welcher - vorzugsweise durch einen Arbeitszylinder (32) - axial verschiebbar angebracht ist, und daß die Leitbahn (19) mit einer koaxial zum Dorn (31) liegenden Kohlestangendurchlaßöffnung (3) ausgestattet ist.

9. Vorrichtung nach einem der Ansprüche 4 - 8, dadurch gekennzeichnet, daß die Elektrolytausschiebeeinheit (12) einen Dorn (35) mit einem in die Zinkhülse (4) der Trockenzelle (1) passenden Durchmesser besitzt, der vorzugsweise von einem Arbeitszylinder (36) in axialer Richtung verschiebbar angebracht ist, und daß die Leitbahn (19) mit einer koaxial zum Dorn (35) befindlichen Elektrolytdurchlaßöffnung (37) ausgestattet ist.

## Claims

1. A method for the recovery of components of zinc-carbon dry cells, wherein at least the carbon and/or zinc are recovered from among the components of the dry cell, characterised in that the bottom plate (4a) of the zinc can (4) of the dry cell (1) to be recovered and sorted is removed by cutting, then the carbon rod (3) is pushed out longitudinally from the dry cell (1) lacking the bottom plate, thereafter the electrolyte matter (5) is removed from the zinc can (4) by pushing the electrolyte matter (5) in the longitudinal direction, whereafter the cut-off bottom plate (4a) is collected preferably together with the zinc can (4) while the carbon rod (3) and electrolyte matter (5) are each separately collected.

2. The method according to claim 1, characterised in that the cutting of the bottom plate and the expulsion of the carbon rod and electrolyte matter are cyclically performed when dry cells are supplied one after another.

3. The method according to claim 1 or 2, characterised in that prior to cutting the bottom plate, a metal sleeve enclosing the zinc can (4) of the dry cell (1) is longitudinally slit and removed.

4. Apparatus for carrying out the method according to any one of claims 1 to 4, characterised in that the apparatus comprises, successively arranged along a processing line (P) of the dry cell (1), a cell feeding means (8), an advance/load unit (9), a bottom plate cutting means (10), a carbon rod expulsion means (11), an electrolyte expelling means (12) and, as the case may be, a can discharge unit (13), the apparatus being equipped with a drive mechanism (14) for transporting the dry cell (1) along the processing line (P) and being further characterised in that the bottom plate cutting means (10), the electrolyte expelling means (12) and the can discharge unit (13) are each provided with a collecting container (44, 34, 38, 41).

5. Apparatus according to claim 4, characterised in that it is constructed as a carrousel wherein the drive mechanism (14) is designed as a central turntable (16) connected to a driving means (17), the turntable (16) comprising radial cell-loading recesses (18) along its rim, a guiding face (19) being disposed at a distance from the rim of the turntable (16) for supporting the dry cell (1) from below and on the exterior side, and that the advance/load unit (9), the bottom plate cutting means (10), the carbon rod expulsion means (11), the electrolyte expelling means (12) and the can discharge unit (13) are arranged along the rim of the turntable (16).

6. Apparatus according to claim 4 or 5, characterised in that the advance/load unit (9) comprises a working cylinder (20) for displacing a receiving head (21) serving at the same time as an exterior support of the dry cell (1).

7. Apparatus according to any one of claims 4 to 6, characterised in that the bottom plate cutting means (10) comprises a cutting disk (23) equipped with a rotating drive means (25) and arranged displaceable in a horizontal disk plane, being displaceable preferably by a working cylinder (26).

8. Apparatus according to any one of claims 4 to 7, characterised in that the carbon rod expulsion means (11) comprises a mandrel (31) that has a diameter not exceeding the diameter of the carbon rod (3) of the dry cell (1), and is disposed axially displaceable preferably by a working cylinder (32), and that the guiding face (19) is provided with a carbon rod aperture (33) arranged coaxial with the mandrel (31).

9. Apparatus according to any one of claims 4 to 8, characterised in that the electrolyte expelling means (12) comprises a mandrel (35) having a diameter fitting into the zinc can (4) of the dry cell (1), the mandrel (35) being axially displaceable preferably by a working cylinder (36), and that the guiding face (19) is provided with an electrolyte aperture (37) arranged coaxial with the mandrel (35).

## Revendications

1. Procédé pour la récupération de composants de piles sèches du type zinc-carbone, où parmi les composants de la pile sèche (1) au moins le carbone et/ou le zinc sont récupérés, le procédé étant caractérisé en ce que la plaque de fond (4a) de la douille en zinc (4) de la pile sèche (1) à récupérer et trier est enlevée en la coupant, puis la baguette de carbone (3) est poussée longitudinalement hors de la pile sèche (1) dépourvue de la plaque de fond (4a), ensuite la masse électrolytique (5) est enlevée de la douille en zinc (4) en poussant la masse électrolytique (5) dans la direction longitudinale, finalement la plaque de fond (4a) enlevée est collectée de préférence avec la douille en zinc (4) tandis que la baguette de carbone (3) et la masse électrolytique (5) sont individuellement collectées.

2. Procédé selon la revendication 1, caractérisé en ce que la coupure de la plaque de fond et l'expulsion de la baguette de carbone et de la masse électrolytique sont exécutées cycliquement lorsque des piles sèches (1) sont alimentées l'une après l'autre.

3. Procédé selon la revendication 1 ou 2, caractérisé en ce qu'avant la coupure de la plaque de fond (4a), une enveloppe métallique entourant la douille en zinc (4) de la pile sèche (1) est fendue longitudinalement et enlevée.

4. Dispositif pour la mise en oeuvre du procédé selon l'une quelconque des revendications 1 à 3, caractérisé en ce que le dispositif comprend, disposés l'un derrière l'autre le long d'une ligne de traitement (P) de la pile sèche (1), un moyen (8) pour alimenter des piles sèches, une unité d'avance/montage (9), un moyen (10) pour couper les plaques de fond, un moyen (11) pour expulser les baguettes de carbone, un moyen (12) pour expulser l'électrolyte, et éventuellement une unité (13) de décharge des douilles, le dispositif étant équipé d'un mécanisme d'entraînement (14) pour transporter la pile sèche (1) le long de la ligne de traitement (P) et étant en plus caractérisé en ce que le moyen (10) pour couper les plaques de fond, le moyen (12) pour expulser l'électrolyte et l'unité (13) de décharge des douilles sont chacun pourvus d'un conteneur collecteur (44, 34, 38, 41).

5. Dispositif selon la revendication 4, caractérisé en ce qu'il est construit en carrousel où le mécanisme d'entraînement (14) est réalisé en forme d'une table tournante (16) centrale connectée à un moyen d'entraînement (17), la table tournante (16) comprenant, le long de son bord, des cavités (18) radiales de montage de piles, une glissière conductrice (19) étant disposé à une distance du bord de la table tournante (16) pour soutenir la pile sèche (1) d'en bas et du côté extérieur, et en ce que l'unité d'avance/montage (9), le moyen (10) pour couper les plaques de fond, le moyen (11) pour expulser les baguettes de carbone, le moyen (12) pour expulser l'électrolyte et l'unité (13) de décharge des douilles sont arrangés le long du bord de la table tournante (16).

6. Dispositif selon la revendication 4 ou 5, caractérisé en ce que l'unité d'avance/montage (9) comprend un cylindre de travail (20) pour déplacer une tête recueillante (21) servant en même temps de soutien extérieur de la pile sèche (1).

7. Dispositif selon l'une quelconque des revendications 4 à 6, caractérisé en ce que le moyen (10) pour couper les plaques de fond comprend un disque de coupure (23) équipé d'un moyen d'entraînement rotatif (25) et arrangé de manière à être déplaçable - préférablement à l'aide d'un cylindre de travail (26) - dans un plan de disque horizontal.

8. Dispositif selon l'une quelconque des revendications 4 à 7, caractérisé en ce que le moyen (11) pour expulser les baguettes de carbone comprend un mandrin (31) dont le diamètre ne dépasse pas le diamètre de la baguette de carbone (3) de la pile sèche (1) et qui est disposé de manière à être axialement déplaçable, préférablement à l'aide d'un cylindre de travail (32), et en ce que la glissière conductrice (19) est pourvue d'une ouverture (33) pour la baguette de carbone (3), cette ouverture étant arrangée coaxiale avec le mandrin (31).

9. Dispositif selon l'une quelconque des revendications 4 à 8, caractérisé en ce que le moyen (12) pour expulser l'électrolyte comprend un mandrin (35) dont le diamètre entre dans la douille en zinc (4) de la pile sèche (1) et qui est disposé de manière à être axialement déplaçable, préférablement à l'aide d'un cylindre de travail (36), et en ce que la glissière conductrice (19) est pourvue d'une ouverture (37) pour l'électrolyte (5) arrangée coaxiale avec le mandrin (35).
